# EUROPEAN PATENT SPECIFICATION

(11) **EP 3 976 961 B1**
(45) Date of publication and mention of the grant of the patent: **05.03.2025**
(21) Application number: 20813069.0
(22) Date of filing: 19.05.2020
(51) Int. Cl.: F03D 7/02

(54) **A WIND TURBINE AND A METHOD OF OPERATING THE WIND TURBINE**
WINDTURBINE UND VERFAHREN ZUM BETRIEB EINER WINDTURBINE
ÉOLIENNE ET PROCÉDÉ DE COMMANDE D'ÉOLIENNE

(30) Priority: 29.05.2019 DK PA201970353
(43) Date of publication of application: 06.04.2022
(73) Proprietor: Envision Energy Co., Ltd., Wuxi, Jiangsu 214443 (CN)
(72) Inventor: PEDERSEN, Keld Stefan, 7100 Vejle (DK)
(74) Representative: Winter, Brandl - Partnerschaft mbB
(86) International application number: PCT/CN2020/090981
(87) International publication number: WO 2020/238693

(56) References cited:
- CN-A- 101 451 497
- CN-A- 102 536 670
- CN-A- 104 632 522
- CN-A- 108 026 895
- CN-A- 108 087 194
- US-A1- 2007 057 517
- US-A1- 2017 335 829
- US-A1- 2018 245 568

## Description

### Field of the Invention

The present invention relates to a wind turbine and a method of operating a wind turbine with a load control algorithm, wherein the wind turbine comprises a control system configured to control the operation of the wind turbine. The control system monitors the load level and changes an operational limit parameter when certain conditions are met.

### Background of the Invention

It is known to monitor and regulate the operation of wind turbines continuously to maximise the power production while maintaining the operation within operation safety limits. Load control algorithms are implemented in the control system to reduce the loads in the wind turbine, wherein the control algorithms may generate a pitch control parameter for adjusting the pitch angle of the wind turbine blade. These load control algorithms reduce the overall loads in the wind turbine, but has a negative effect of the power production.

WO 2015/192853 A1 discloses a thrust-limiting control algorithm for reducing the maximum mechanical loads on the wind turbine tower, wherein a wind estimator and a turbulence estimator generates a number of output signals that are inputted to a thrust-limiter. The thrust limiter comprises a safety switch receiving an input from a turbulence detector and an external control. The difference between the output signal from this safety switch and the estimated thrust force is inputted to a post-processing module which generates another output signal. This output signal is then combined with a thrust limiter feed forward signal to generate a pitch control signal. The pitch angle of the wind turbine blades are adjusted according to this pitch control signal. It is stated that the above thrust-limiting control algorithm is highly efficient at mean wind speeds. As also stated, this control scheme will still have a negative effect on the power production, although a reduced effect.

WO 2011/042369 A1 discloses a load control algorithm for regulating the operation of the wind turbine, wherein the load control algorithm monitors a load signal representative of the dynamic loadings on the rotor. The load control algorithm then estimates an operational parameter based on this load signal and determines the variations of this operational parameter over time. The variations are then compared to a threshold value where the operation of the wind turbine is de-rated or the operational parameter is modified, if the variations exceed the threshold value. If the variations are below the threshold value, then the operation of the wind turbine remains unmodified. It is stated that load control is activated if high turbulences are detected. This control scheme is based on wind speed measurements, however, the anemometer is normally positioned behind the rotor and thus the measurement is disturbed by the passing wind turbine blades. Further, the wind speed measurement may be performed using LIDAR, however, this multi-point measurement still does not give a reliable representation of the wind speed within the swept rotor area.

WO 2017/036481 A1 discloses a control scheme for operating the wind turbine where the control system uses a rotational speed exclusion speed zone to control the rotational speed of the rotor. The rotational speed exclusion speed zone is aligned with a reference rotational speed representative of an eigenfrequency of the wind turbine tower. The rotational speed of the rotor is then controlled so that the current rotational speed is moved out of this exclusion zone, thereby reducing the oscillating motions in the wind turbine tower. It is stated that the width of this rotational speed exclusion zone is determined as function of the measured vibration signal.

Document US 2007/0057517 A1 relates to a method for limiting loads in a wind turbine by using measured loads or wind speed to increase the minimum pitch angle for extended periods.

Thus, there is a need for an improved load control method for reducing loads in the wind turbine and at the same time minimising the power loss. Further, there is a need for an improved load control method that is only activated in crucial situations while having a minimal effect in other situations.

### Object of the Invention

An object of the invention is to provide a method and wind turbine that overcomes the abovementioned problems of the cited prior art.

Another object of the invention is to provide a method and wind turbine that reduces mechanical loads in the wind turbine while maintaining the power production.

A further object of the invention is to provide a method and wind turbine that allows for an increased tip-to-tower clearance at high blade loadings.

Yet another object of the invention is to provide a method and wind turbine that reduces the effects of extreme wind load conditions.

### Description of the Invention

The present invention is defined by the attached independent claims. Advantageous embodiments are described in the attached dependent claims. Embodiments and/or examples mentioned in the description that do not fall under the scope of the claims are useful for understanding the present invention.

The object of the present invention as claimed in the accompanying claims is achieved by a method of controlling a wind turbine, the wind turbine comprising a wind turbine tower, a nacelle arranged on top of the wind turbine tower, a rotor with at least two wind turbine blades arranged rotatably relative to the nacelle, and a wind turbine control system comprising a controller and a sensor unit, wherein the controller is configured to control the operation of the wind turbine, and the sensor unit is electrically connected to the controller and configured to measure a vibration signal of the wind turbine, wherein the method comprises the steps of:
- measuring a vibration signal of the wind turbine indicative of turbulence,
- calculating a severity indicator based on the vibration signal,
- determining an operational limit parameter as a function of the severity indicator,
- determining a control signal based on the operational limit parameter, and
- controlling the operation of the wind turbine according to the control signal.

This provides a simple and reliable control method of reducing extreme loads in the wind turbine without also reducing the annual energy production (AEP). The present control method eliminates the need for a direct measurement of the wind turbulence which is normally associated with large uncertainties. This further reduces the need for performing a constant peak shaving of the thrust level and/or de-rating of the operation of the wind turbine, which in turn will adversely affect the power production.

The present control method may indirectly reduce the maximum thrust at extreme load conditions. Further, the present control method may have the surprising effect of increasing the rated wind speed. This in turns allows the tip-to-tower clearance to be increased at high blade loadings. This can be achieved without having to increase the blade stiffness and the bending stiffness of the wind turbine tower, thereby saving weight and costs.

The present control method monitors the vibration level of the wind turbine instead of monitoring the turbulence as in conventional control methods. This allows for a more reliable measurement as it is not dependent on a direct wind measurement. The vibration characteristics have shown to provide a very good correlation with the characteristics of the turbulence. Thus, the vibration level may be measured using existing sensor units in the wind turbine, thus further saving costs. Alternatively, the vibration level may be measured by installing one or more sensor units in the wind turbine and electrically connecting it/them to the controller. The measured sensor signal(s) is/are then inputted to the controller and used to calculate or estimate the severity indicator.

The term "severity indicator" is here defined as a signal indicative of the severity level of the current vibrations of the wind turbine. In example, but not limited to, the severity indicator may be a peak value, a peak-to-peak value, an averaged value or a root-mean-square (RMS) value. The severity indicator may further be a load value, such as a fatigue load value.

The vibrations may preferably be measured using one or more vibration sensors positioned on one or more components of the wind turbine so that they are able to measure the vibrations.

According to one embodiment, the vibration signal is measured in a top part of the wind turbine.

The vibrations may preferably be measured in a top part of the wind turbine, such in a stationary frame of reference. Alternatively, the vibrations may be measured in a rotating frame of reference and then transformed to the stationary frame of reference. In example, the vibrations may be measured on or in the rotor hub or wind turbine blades. In another example, the vibrations may be measured on or in the nacelle or wind turbine tower. This allows for an indirect measurement of the wind turbulence as the sensor signal(s) provide a representative measurement of the turbulence level.

The vibrations may advantageously be measured in one direction, e.g. along the rotation axis of the rotor or along an axis perpendicular to the rotation axis. The rotation axis may define an X-axis, the axis perpendicular to the rotation axis may define a Y-axis, while the wind turbine tower may define a Z-axis. In example, the vibrations may be measured as accelerations, velocities and/or displacements. The vibrations may thus be measured as fore-aft vibrations, e.g. accelerations, of the wind turbine. This allows for a reliable measurement of the vibration level.

According to one embodiment, the vibrations are measured in real-time.

The vibrations may preferably be measured in real-time or near real-time for calculating a current severity level. This allows the present control method to detect extreme wind gust conditions as well as extreme load conditions. This increases the flexibility of the present control method whereas conventional load control methods are only able to detect extreme load conditions.

The vibrations may be measured in the time domain and a transform function may be applied to the measured vibration signal to transform the vibration signal into the frequency domain. In example, the transform algorithm may be a Fourier transform function, an impulse response algorithm, a Z-transform algorithm, a discrete algorithm or another suitable transform algorithm. The Fourier transform algorithm may be a Fast Fourier Transform (FFT) function. The impulse response function may be a Finite Impulse Response (FIR) filter algorithm. Alternatively, the vibrations may be measured directly in the frequency domain. A spectrum analysis may then be performed on the transformed vibration signal to determine the severity indicator.

Alternatively, the spectrum analysis may be performed on the measured vibration signal instead. This allows the severity indicator to be determined in either the time domain or in the frequency domain dependent on the type of sensor unit used.

According to one embodiment, the severity indicator is calculated within a predetermined time period.

The severity indicator may advantageously be a short-term value, e.g. a fatigue load parameter. The severity indicator, e.g. the fatigue load parameter, may be calculated within a predetermined time period, e.g. of a few minutes. In example, the time period may be selected between 30 seconds to 5 minutes, preferably between 1 to 3 minutes. However, any time period there in-between may be selected dependent on the ratings and configuration of the wind turbine. This provides a very good indication of the wind turbulence as the severity indicator can be determined as a short term value.

In example, a cyclic counting algorithm may be applied to the measured or transformed vibration signal for calculating the severity indicator. The severity indicator, e.g. the fatigue load parameter, may be accumulated within the time period to provide an accumulated value, e.g. an accumulated load parameter. The cyclic counting algorithm may in example, but not limited to, be a rainflow counting algorithm. However, a range-pair algorithm or another cyclic counting algorithm may be used to calculate the fatigue load parameter. This gives a good representation of the fatigue loadings of the wind turbine. Alternatively, a simple RMS or averaging function may be applied to the measured vibration signal for calculating the severity indicator. This also gives a good representation of the loadings of the wind turbine.

According to the invention, the operational limit parameter is determined as function of the severity indicator.

The term "operational limit parameter" is here defined as a threshold value used to limit the operational range of that operational parameter. In example, the operational limit parameter may indicate an upper limit value and/or a lower limit value of the operational range.

In a non-claimed embodiment, the operational limit parameter of a particular control signal may simply be determined using a look-up table implemented in the controller. The values of the look-up table may in example be determined using the wind turbine design parameters. Alternatively or additionally, the values may be determined using simulations of the dynamics and/or steady-states of the wind turbine.

According to the invention, the operational limit parameter is determined as function of the calculated severity indicator. The function may be a continuous function or a piecewise function comprising two or more sub-functions. In example, the continuous function or sub-function may be a step function, a ramp function, a sigmoid function or another suitable function. The functions may define one or more end values each indicative of a predetermined operational limit parameter and/or a predetermined severity level. The operational limit parameter may thus be adapted to the current vibration level.

Further, the values of the look-up table and/or the parameters of the above function (or sub-functions) may be tuned using one or more tuning methods replying on statistics. In example, the values/parameters may be tuned based on first principle relationships, but other tuning methods may be used. Alternatively or additionally, the values of the look-up table and/or the parameters of the above function may be tuned using one or more advanced tuning methods that includes time series analysis. This allows for a more optimal operation and thus improved performance of the wind turbine. This also allows the present control method to be tuned so that it is only activated for crucial situations while having a minimal effect on other situations.

The function may simply act as a peak shaving function which may reduce local peaks in the operational parameter located above a predetermined threshold value. Such peak shaving functions are known to the skilled person. The peak shaving may thus be applied, or activated, for the duration (i.e. band) that the operational parameter remains above the threshold value, thereby limiting the operational parameter. Outside the band, the peak shaving is not applied and thus the operational parameter is not limited. The function may in advantage be used to reduce local positive peaks as well as local negative peaks.

Conventional load control methods are activated by using power, pitch angle, wind speed or a similar signal as input, which prevents them from distinguishing between normal and abnormal vibrations levels. This affects the AEP as the wind turbine often is not operated in a maximal power mode. The present control method has the advantage that it is only activated when the vibration level is abnormal (detected via the severity indicator) thus it has a negligible effect on the AEP.

According to the invention, the operational limit parameter indicates a minimum or maximum limit of an operational range of the operational parameter.

During operation, the operational parameter may be varied within a predetermined operational range defined by a minimum operational limit and/or a maximum operational limit. The operational limit parameter may indicate the maximum operational limit, wherein the operational parameter may vary freely below the maximum operational limit. In example, the maximum operational limit may be a maximum thrust value, a maximum rotational speed value, or a maximum power value. This allows the wind turbine to be operated within safe conditions.

Alternatively or additionally, the operational limit parameter may indicate the minimum operational limit wherein the operational parameter may vary freely above the minimum operational limit. In example, the minimum operational limit may be a minimum pitch value. This restricts the minimum pitch angle of the wind turbine blades.

In this configuration, the operational limit parameter may be used directly in the set-point generator to generate the control signal for that operational parameter. In example, but not limited to, the operational limit parameter and the control signal may be the same, e.g. pitch angle, rotational speed, thrust or another controllable parameter. Thus, there is no need to generate another control signal (e.g. pitch angle) based on the operational limit parameter (e.g. thrust). This allows the present control scheme to act as a smart peak shaving function.

The function may preferably be a continuous function allowing for a smooth start and/or end of the peak shaving. Alternatively, the function may be a piecewise function defining one or more transition bands at or around the threshold value so that the peak shaving is gradually faded in and/or out.

In the above method of controlling a wind turbine, the step of determining an operational limit parameter comprises:
- dividing a range of the severity indicator into operational zones defined by threshold values, wherein the threshold values comprise a first threshold value and a second threshold value, and
- comparing the severity indicator to threshold values, wherein the threshold values comprise a first threshold value and a second threshold value,
- wherein if the severity indicator is below the first threshold value, a first operational limit parameter is determined, then the wind turbine is operated in an alert mode, and the wind turbine is put in a reduced operation mode in order to detect any extreme wind gusts; and
- wherein if the severity indicator or operational parameter is above the second threshold value, a second operational limit parameter is determined, then the wind turbine is operated in a reduced load mode, and the operation of the wind turbine is reduced to reduce extreme loads.

The threshold values indicate operational zones, each defining a dedicated sub-function or value of the operational limit parameter. This allows for an adaptive activation of the present control method.

According to the invention, the severity indicator (e.g. the fatigue load parameter) comprises a first threshold value and a second threshold value. The first threshold value and zero may together define a low load zone where no or low turbulences are present. The first and second threshold values may together define a normal operation zone where a normal level of turbulences is present. The second threshold value and higher may together define a high load zone where extreme turbulences are present. The operation of the wind turbine may thus be adapted to different vibration levels.

In example, the low load zone may define a first operational limit parameter or sub-function, the high load zone may define a second operational limit parameter or sub-function, and the normal operational zone may define a third operational limit parameter or sub-function. The first operational limit parameter or sub-function may differ from the second operational limit parameter or sub-function. Further, the third operational limit parameter or sub-function may differ from the first and/or second operational limit parameter or sub-functions. The operation of the wind turbine may further be adapted to different set-point limits for the control signal.

The individual threshold values may be adapted or tuned to a particular configuration of the wind turbine. The present load control method may thus be fine-tuned so that it is only activated for critical situations and has a negligible effect in other situations.

According to one embodiment, a first control signal is determined based on the first operational limit parameter, wherein the wind turbine is operated in a first mode according to the first control signal.

The operational limit parameter may be inputted to a set-point generator in the controller along with one or more other input signals. The set-point generator may be configured to generate a suitable control signal for controlling a particular operational parameter of the wind turbine, as explained later, during operation. The control signal may define a reference set-point value for that operational parameter, wherein the operational limit parameter may define an upper or lower limit of that operational parameter. In example, the operational parameter may be a thrust force acting on the wind turbine, a torque or a rotational speed of the rotor, a common or individual pitch angle of the wind turbine blades, a generated power, or another suitable operational parameter.

The controller may determine that the calculated severity indicator is between the first and second threshold values, than the wind turbine may be operated in a normal operation mode. In this normal operation mode, the wind turbine may operate to produce maximum power and the various control signals, e.g. reference set-point values, may be determined accordingly. In this normal operation mode, the operational parameter may vary freely below the upper limit and/or above the lower limit, thus the control signal may remain unmodified.

If the operational parameter exceeds above the upper limit or drops below the lower limit, the present load control may be activated and the set-point generator may modify the control signal to reduce the loads. Once the operational parameter passes the upper or lower limit again, the present load control may then be deactivated and the set-point generator is free to determine the control signal. This allows the present control method to detect extreme wind gusts, such as extreme coherence gusts with direction change (ECD).

According to one embodiment, a second control signal is determined based on the second operational limit parameter, wherein the wind turbine is operated in a second mode according to the second control signal.

According to the invention, if the controller determines that the calculated severity indicator is below the first threshold value, than the wind turbine is operated in an alert mode. In this alert mode, the wind turbine is put in a reduced operation mode in order to detect any extreme wind gusts. The set-point generator may thus modify the control signal so that the operational parameter is reduced below the upper limit defined by the first operational limit parameter. The present load control may then be activated or deactivated, as described above.

According to the invention, if the controller determines that the calculated severity indicator is above the second threshold value, than the wind turbine is operated in a reduced load mode. In this reduced load mode, the operation of the wind turbine is reduced to reduce extreme loads. The set-point generator may thus modify the control signal so that the operational parameter is reduced below the upper limit defined by the second operational limit parameter. The present load control may then be activated or deactivated, as described above.

Optionally, the parameters of the present control scheme may be selected so that the wind turbine may be operated in a boosted operation mode where the power set-point is increased. Optionally, the parameters of the present control scheme may be selected so that the wind turbine may be operated in a de-rated operation mode where the power set-point is decreased. Optionally, the parameters of the present control scheme may be selected so that the control signal may be used to perform an individual pitch control of the wind turbine blades, thereby reducing the blade root bending moment.

The object of the present invention is further achieved by a wind turbine comprising:
- a wind turbine tower,
- a nacelle arranged on top of the wind turbine tower,
- a rotor with at least two wind turbine blades arranged rotatably relative to the nacelle,
- a wind turbine control system comprising a controller and a sensor unit, the sensor unit comprises a vibration sensor, wherein the controller is configured to control the operation of the wind turbine, the sensor unit is electrically connected to the controller and the vibration sensor is configured to measure a vibration signal of the wind turbine indicative of turbulence,
- wherein the controller is further configured to calculate a severity indicator based on the vibration signal, to determine a multiple of operational limit parameters as a function of the severity indicator, to determine a multiple of control signals based on the operational limit parameters, and to control the operation of the wind turbine according to the control signal.

The controller is configured to determine an operational limit parameter as a function of the severity indicator by:
- dividing a range of the severity indicator into operational zones defined by at least one threshold value, wherein the at least one threshold value comprises a first threshold value and a second threshold value, and
- comparing the severity indicator with the at least one threshold value, wherein
- if the severity indicator is below the first threshold value, a first operational limit parameter is determined, then the wind turbine is operated in an alert mode, and the wind turbine is put in a reduced operation mode in order to detect any extreme wind gusts;
- if the severity indicator is above the second threshold value, a second operational limit parameter is determined, then the wind turbine is operated in a reduced load mode, and the operation of the wind turbine is reduced to reduce extreme loads

This provides a simple and reliable control scheme for reducing extreme loads in the wind turbine without also reducing the annual energy production (AEP). There is no need for measuring the turbulence of the wind which normally is associated with large uncertainties. The tip-to-tower clearance at high blade loadings may thus be increased without having to increase the stiffness and thus the weight of the wind turbine blades. This in turn allows the raceway fatigue in the blade bearings, hub bearings and main bearings to be reduced.

The present control scheme monitors the severity level of the wind turbine measured by means of vibration sensors providing a reliable representation of the turbulence. Conventional control schemes using turbulence sensors to measure turbulence directly, however, such measurements are not reliable because the wind field is measured in a limited number of points. The vibration level is used to determine an operational limit parameter of a particular control signal which is used to control the operation of the wind turbine. This allows the present control scheme to be implemented in the wind turbine control system of new wind turbines.

The wind turbine comprises a wind turbine tower, a nacelle arranged on top of the wind turbine tower, and a rotor arranged relative to the nacelle. The rotor comprises two or more wind turbine blades connected to a rotor hub. The rotor is connected to a generator via a rotation shaft. The rotor, nacelle and upper part of the wind turbine tower together define a top part of the wind turbine. A pitch bearing system is arranged between the hub and the blade root or between two blade sections for pitching at least an outer section of the wind turbine blade. A yaw bearing system is arranged between the wind turbine tower and the nacelle for yawing the nacelle and rotor relative to the wind direction.

A wind turbine control system is installed in the wind turbine for controlling and monitoring the operation of the wind turbine. The wind turbine control system comprises a controller electrically connected to one or more vibration sensors located in the top part of the wind turbine. Further sensors may be arranged on or in the wind turbine and electrically connected to the controller for monitoring other operational parameters. In example, the wind turbine may comprise a pitch angle sensor, a torque sensor, a rotational speed sensor, a thrust sensor, and/or other suitable sensors.

According to one embodiment, the sensor unit is arranged in a top part of the wind turbine, wherein the sensor unit is configured to measure at least one of accelerations, velocities or displacements in at least one direction.

The vibration sensor may in example, but not limited to, be a strain gauge, a displacement sensor, an accelerometer, a velocity sensor, or a fibre optic sensor unit. The fibre optic sensor unit may comprise an optical light source transmitting an optical signal into an optical fibre where a detector receives the optical signal reflected back from the optical fibre. This allows the vibrations to be measured using any suitable vibration sensor.

Preferably, the vibration sensor is an accelerometer configured to measure the accelerations in at least one direction. Alternatively, the accelerometer may be configured to measure the accelerations in multiple directions, such in the X-axis, the Y-axis, and/or the Z-axis. The vibration sensor, e.g. the accelerometer, may be an existing sensor in the wind turbine, thus no new sensors need to be installed. Alternatively, the wind turbine may be retrofitted with a vibration sensor, e.g. the accelerometer, in order to measure the accelerations. This allows the present control scheme to also be retrofitted into the wind turbine control system of existing wind turbines, thus enabling existing wind turbines to be upgraded.

The characteristics of the vibrations, e.g. accelerations, have shown to have a very good correlation with the characteristics of the wind turbulence. Therefore, the turbulences may be measured indirectly via the vibration sensor, e.g. accelerometer, which provides a reliable measurement. There is no need for a turbulence sensor.

According to one embodiment, the severity indicator is a short term value.

The controller may be configured to calculate the severity indicator, e.g. a fatigue load parameter, based on the measured vibration signal. Alternatively, the measured vibration signal may be transformed into the frequency domain before calculating the severity indicator. The severity indicator, or fatigue load parameter, may advantageously be a short-term value, e.g. a short-term fatigue load parameter. The vibration signal may be inputted to a severity indicator module of the controller which is configured to calculate the severity indicator. This allows for an optimal detection of the vibration level. According to one embodiment, the controller is configured to calculate the severity indicator using at least one of a cyclic counter, a RMS algorithm or an averaging algorithm.

The severity indicator module may preferably use a cyclic counting algorithm to calculate an accumulated fatigue load parameter in real time. In example, the cyclic counter may be a rainflow counter. However, another type of cyclic counter may also be used. This allows for an optimal calculation of the severity level.

However, the severity module may also use a RMS or averaging algorithm to calculate a RMS-value or an averaged value in real-time. This also allows for an optimal calculation of the severity level.

According to one embodiment, the operational limit parameter is determined by the controller using a look-up table or a function implemented in the controller.

According to a non-claimed embodiment, the controller may use a look-up table to determine the operational limit parameter of a particular control signal. The look-up table may be implemented in the controller, or in a database connected to the controller. The operational limit parameter may be inputted to a set-point generator of the controller, along with a current value of the operational parameter. The operational parameter may be determined by an operational parameter module of the controller. Alternatively, the operational parameter may be determined by the set-point generator. The set-point generator may then determine the control signal according to this operational limit parameter and the current value. This allows for a simple and effective way of controlling the operation of the wind turbine.

According to the invention, instead of using a look-up table, the controller applies a predetermined function to the calculated severity indicator in order to determine the operational limit parameter. The function may be a continuous function or a piecewise function, as described earlier. This allows the operational limit parameter to be adapted to the current load level.

When the operational parameter is below the upper limit and/or above the lower limit, the corresponding control signal remains unmodified. When the operational parameter exceeds the upper limit and/or drops below the lower limit, the control signal is modified to bring the operational parameter within safe operating limits again.

The present control scheme may determine the operational limit parameters of multiple operational parameters using individual functions. The individual operational limit parameters together with the operational parameters may be inputted to one or more set-point generators. This allows the present control scheme to adapt the operation of the wind turbine if more than one condition is met. In example, the set-point generator may increase the power set-point, if two or more operational parameters are below the respective operational limit parameters within the same load range.

According to one embodiment, the control signal is at least one of a pitch control signal, a thrust control signal, a torque control signal or a rotational speed control signal.

The control signal may preferably be a thrust control signal used to control the thrust level acting on the wind turbine. This is particularly advantageous as the thrust does not affect the power calculations. Further, this allows the tip-to-tower clearance to be increased at high loadings.

The control signal may also be a pitch set-point used to control a common pitch angle or individual pitch angles for the wind turbine blades. The control signal may also be a torque set-point or rotational speed set-point used to control the torque or rotational speed of rotor. This allows the present control scheme, when activated, to adapt the operation of the wind turbine.

Optionally, the control signal may be a power set-point used to control the power production of the wind turbine. The present control scheme may thus be used to boost or de-rate the power production dependent on the current severity level.

The present control scheme may adapt the operational limit parameter according to the current severity level, as mentioned earlier. The range of the severity indicator may be divided into two or more load zones by the threshold values. Further, the range of the operational parameter may be divided into two more operational zones by the threshold values. The limit of the operational parameter and thus the control signal may thus be adapted according to the current severity level, e.g. the load level.

In example, if the severity level increases or decreases past one threshold value and the operational parameter stays below the upper limit and/or above the lower limit, then the control signal and thus the operation mode may remain unmodified. In example, if the severity level increases or decreases past one threshold value and the operational parameter thereby exceed the upper limit and/or drops below the lower limit, then the control signal and thus the operation mode may be modified.

In example, if the operational parameter while remaining within one load zone stays below the upper limit and/or above the lower limit, then the control signal and thus the operation mode may remain unmodified. In example, if the operational parameter, while remaining within one load zone, exceeds the upper limit and/or drops below the lower limit, then the control signal and thus the operation mode may be modified.

### Description of the Drawing

The invention is described by example only and with reference to the drawings, wherein:
- Fig. 1: shows an exemplary embodiment of a wind turbine,
- Fig. 2: shows a first embodiment of a load control scheme,
- Fig. 3: shows a second embodiment of the present load control scheme,
- Fig. 4: shows an exemplary graph of a peak shaving of an operational parameter,
- Fig. 5: shows an exemplary graph of the operational limit parameter with threshold values,
- Fig. 6: shows an exemplary graph of the tuned threshold values of the operational limit parameter using a fast tuning technique,
- Fig. 7: shows four exemplary graphs of the tuned thresholds of the operational limit parameter using different tuning techniques,
- Fig. 8: shows a graph of a measured operational parameter of an exemplary field wind turbine in which the present load scheme is implemented,
- Fig. 9: shows five operational parameters of an exemplary wind turbine with and without the present load scheme implemented during low turbulences,
- Fig. 10: shows five operational parameters of an exemplary wind turbine with and without the present load scheme implemented during normal operation, and
- Fig. 11: shows five operational parameters of an exemplary wind turbine with and without the present load scheme implemented during high turbulences.

In the following text, the figures will be described one by one, and the different parts and positions seen in the figures will be numbered with the same numbers in the different figures. Not all parts and positions indicated in a specific figure will necessarily be discussed together with that figure.

### Reference list

- 1.: Wind turbine
- 2.: Wind turbine tower
- 3.: Nacelle
- 4.: Yaw mechanism
- 5.: Wind turbine blades
- 6.: Rotor hub
- 7.: Pitch mechanism
- 8.: Tip end
- 9.: Blade root
- 20.: Leading edge
- 11.: Trailing edge
- 12.: Wind turbine control system
- 13.: Vibration sensor
- 14.: Sensor units
- 15.: Controller
- 16.: Braking mechanism
- 17.: Severity indicator module
- 18.: Severity indicator
- 19.: Look up table
- 20.: Operational limit parameter
- 21.: Set-point generator
- 22.: Operational parameter
- 23.: Operational signal
- 24.: Operational level
- 25.: Threshold value
- 26.: Band
- 27.: First threshold value
- 28.: Second threshold value

### Detailed Description of the Invention

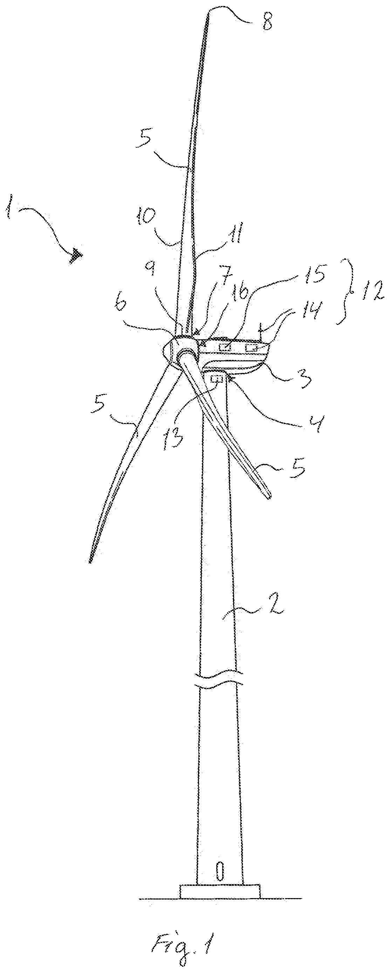

Fig. 1 shows a wind turbine 1 comprising a wind turbine tower 2 and a nacelle 3 arranged on top of the wind turbine tower 2. A yaw mechanism 4 is arranged between the nacelle 3 and the wind turbine tower 2 and configured to yaw the nacelle 3 around a yaw axis and into a yaw angle. A rotor comprising at least two wind turbine blades 5 and a hub is rotatably arranged relative to the nacelle 3 and connected to a drive train in the wind turbine 1 via a rotor shaft. The wind turbine blades 5 are connected to a rotor hub 6 via a pitch mechanism 7. The pitch mechanism 7 is configured to pitch each wind turbine blade 5 around a pitch axis into a pitch angle.

Each wind turbine blade 5 extends from a tip end 8 to a blade root 9 and further from a leading edge 10 to a trailing edge 11. The wind turbine blade 5 has a blade shell having an aerodynamic profile which defines a pressure side and a suction side.

The wind turbine 1 comprises a wind turbine control system 12, which comprises a controller 15 configured to control the operation of the wind turbine 1 and a number of sensor units 14 configured to a number of operational parameters. Each sensor unit 14 is in communication with the controller 15 via a wired or wireless connection. Said sensor units 15 comprise at least one of a pitch angle sensor, a torque sensor, a rotational speed sensor, a thrust sensor, a wind speed sensor or suitable sensors. Further, a vibration sensor unit 13 is arranged in the top part of the wind turbine and configured to measure the vibrations of the wind turbine 1. Here the vibration sensor 13 is arranged on the wind turbine tower 2, but it can be placed anywhere on the top part of the wind turbine 1.

A braking system is arranged relative to the rotor or the rotation shaft and comprises a braking mechanism 16 configured to brake the rotational speed of the rotor. The braking system is connected to the controller 15, wherein the controller 15 controls the operation of the braking system. Further, the controller 15 is connected to and controls the operation of a pitching system for pitching the wind turbine blades 5, wherein the pitching mechanism 7 forms part of the pitching system.

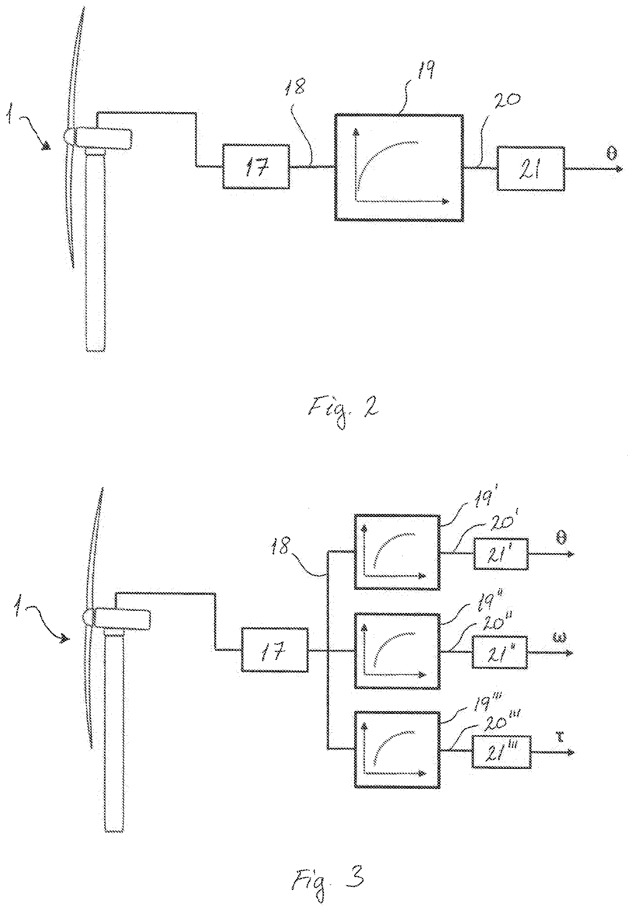

Fig. 2 shows a first embodiment of the load control scheme which is implemented in the controller 15 of the wind turbine control system 12.

The vibrations are measured in real-time and the signal from the vibration sensor 113 is inputted to a severity indicator module 17 which calculates a severity indicator 18 based on the vibration signal. A transform function, e.g. a FFT function, is applied to the measured vibration signal before performing a spectrum analysis for determining the severity indicator 18. Here the severity indicator 18 is calculated as a fatigue load parameter. This allows for a reliable indirect measurement of the turbulence without the use of turbulence sensors.

A look-up table 19 is used in this non-claimed embodiment by the controller 15 to determine an operational limit parameter 20 for a particular operational parameter of the wind turbine 1. The operational limit parameter 20 is inputted to a set-point generator 21 which generates a control signal based on the output from the look-up table 19. Here the control signal is a pitch angle control signal Θ. The control signal is used by the controller 15 to control the operation of the wind turbine 1. This allows the present load scheme only to be activated in critical situations without affecting the AEP.

Fig. 3 shows a non-claimed second embodiment of the present load control scheme wherein the severity indicator 18 is used to determine a multiple of control signals. Here the severity indicator 18 is used by the controller 15 to determine a first operational limit parameter 20' using a first look-up table 19'. The first operational limit parameter 20' is inputted to a first set-point generator 21' which generates a first control signal, e.g. the pitch control signal Θ.

Similarly, the severity indicator 18 is used by the controller 15 to determine a second operational limit parameter 20" using a second look-up table 19''. The second operational limit parameter 20" is inputted to a second set-point generator 21'' which generates a second control signal, e.g. a rotational speed control signal ω.

Further, the severity indicator 18 is used by the controller 15 to determine a third operational limit parameter 20‴ using a third look-up table 19‴. The third operational limit parameter 20‴ is inputted to a third set-point generator 21‴ which generates a third control signal, e.g. a torque control signal τ.

According to the invention, instead of using a look-up table 19, 19', 19", 19‴, the controller 15 determines the operational limit parameter 20, 20', 20'', 20‴ as function of the severity indicator 18 signal.

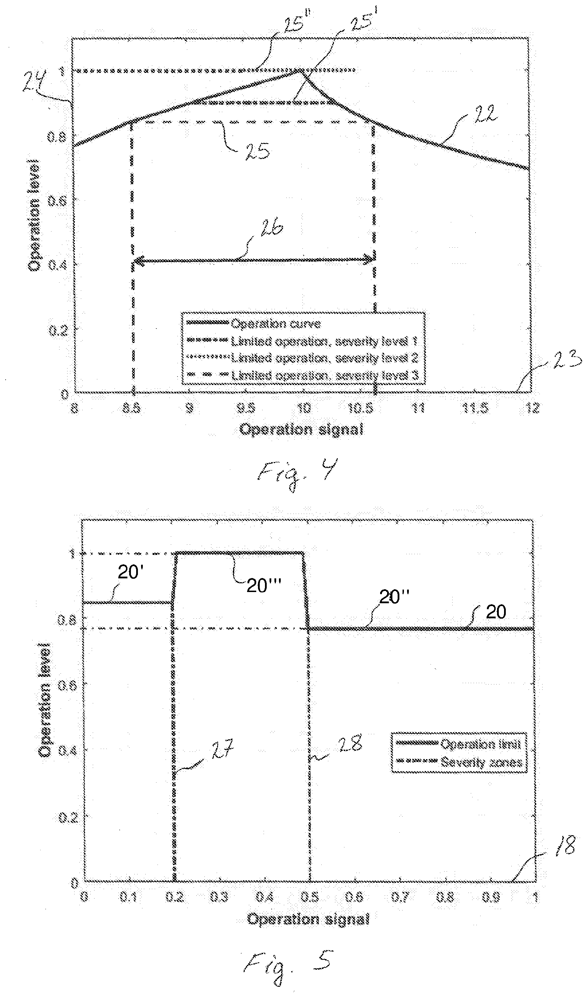

Fig. 4 shows an exemplary graph of a peak shaving of an operational parameter 22 measured of the wind turbine 1 using one of the sensors units 14. The X-axis indicates an operational signal 23 of the wind turbine 1 and the Y-axis indicates the operational level 24 or amplitude of the operational parameter 22.

Here, the above function applied to the severity indicator 18 acts as a peak shaver which is activated when the operational parameter 22 exceeds a predetermined threshold value 25. The peak shaving is applied within a band 26 defined by the duration that the operational parameter stays above the threshold value 25.

The band width may vary dependent on the selected threshold value. In example, the threshold value may be determined as a percentage of the maximum amplitude of the operational parameter 22.

Fig. 5 shows an exemplary graph of the operational limit parameter 20 divided into a number of zones defined by a set of threshold values. The X-axis indicates the severity indicator 18 and the Y-axis indicates the severity level or amplitude. The range of the severity indicator 18 is divided into three zones by a first threshold value 27 and a second threshold value 28, as indicated in fig. 5.

The first threshold value 27 and zero define a low load zone in which the upper limit of the operational parameter 22 is reduced to a first operational limit parameter 20'. In this mode, the wind turbine 1 is operated in an alert mode so that the wind turbine 1 can detect and react to extreme wind gust conditions.

The first and second threshold values 27, 28 define a normal operation zone in which the operational limit parameter 20 is set to a third operational limit parameter 20‴ indicating a maximum upper limit. In this mode, the wind turbine 1 is operated to produce maximum power.

The second threshold value 28 and above define a high load zone in which the upper limit of the operational parameter 22 is reduced to a second operational limit parameter 20".

In this mode, the wind turbine 1 is operated in a load reduced mode where the extreme loads are reduced to within safe operating conditions.

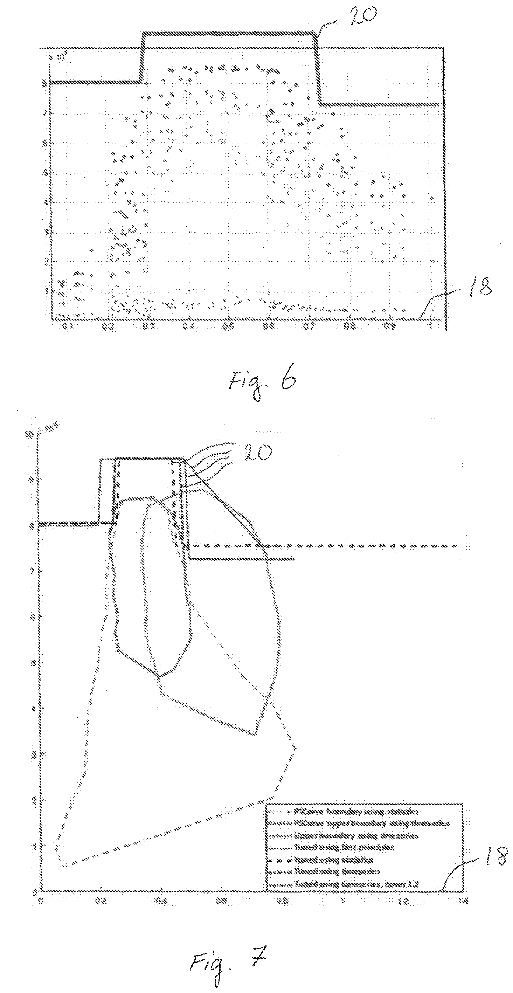

Fig. 6 shows an exemplary graph of the tuned threshold values of the operational limit parameter 20 using a fast tuning technique. Here, the threshold values are tuned using previous or simulated measurements of the wind turbine 1.

The first and second threshold values and the different levels of the operational limit parameter 20 within the different zones are tuned so that the present load scheme is only activated in critical situation while having a minimal effect in other situations, as indicated in fig. 7.

In fig. 6, the different values of the operational limit parameter 20 are tuned using only statistics. However, the values of the operational limit parameter 20 may also be tuned using an advanced tuning technique, as indicated in fig. 7.

Fig. 7 shows four exemplary graphs of the tuned thresholds of the operational limit parameter 20 using different tuning techniques. As illustrated in fig. 7, the upper limit values of the operational limit parameter 20 in the different zones are tuned so that the present load scheme is only activated in critical situations. Similarly, the first and second threshold values 27, 28 are tuned so that the band width of each zone is adapted to the settings and configurations of the wind turbine 1.

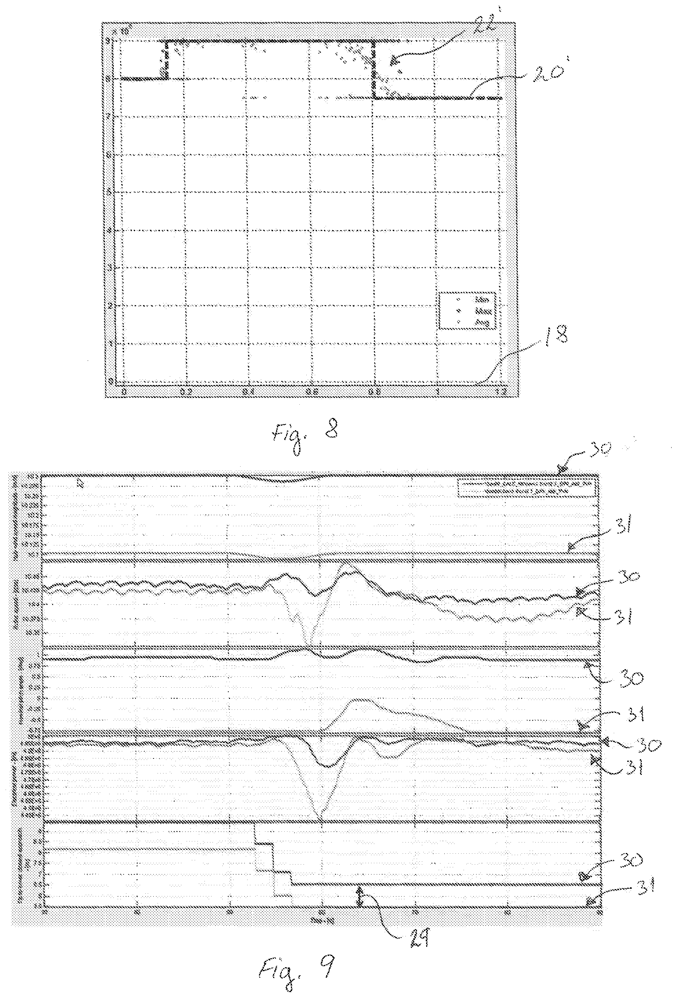

Fig. 8 shows a graph of a measured operational parameter 22' of an exemplary field wind turbine 1' in which the present load scheme is implemented. Here, the dotted line indicates the operational limit parameter 20' implemented in that wind turbine 1'.

Here, the X-axis indicates the severity indicator 18 and the Y-axis indicates the level or amplitude of the operational parameter 22'.

As illustrated, the operational parameter 22' follows the values of the operational limit parameter 20'. This indicates that the present load scheme does not affect the AEP, when activated.

Fig. 9 shows five operational parameters of an exemplary wind turbine 1" with and without the present load scheme implemented during low turbulences. In this situation, the wind turbine 1" is operated in the low load mode.

The graphs 30 indicate the operational parameters of the wind turbine 1" with the present load scheme implemented. The graphs 31 indicate the operational parameters of the wind turbine 1" without the present load scheme implemented.

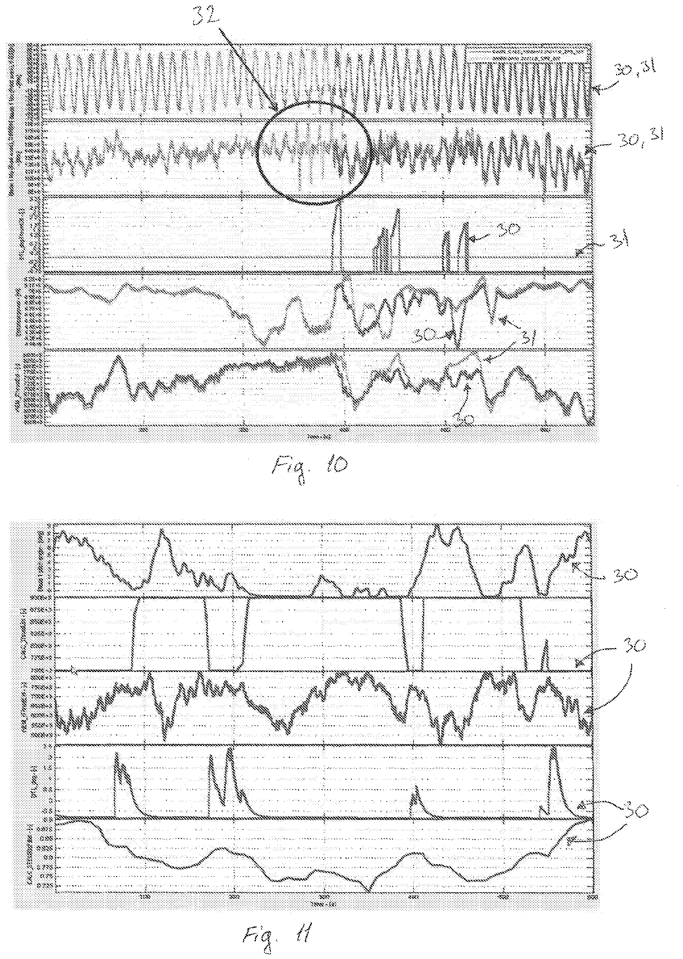

As indicated in the lowermost graphs 30, 31 of fig. 9, the tip-to-tower clearance is increased (marked by arrow 29) with the present load scheme. Thus, weight and costs of the wind turbine blades 5 can be reduced as no additional structural strength is needed. Fig. 10 shows five operational parameters of the wind turbine 1" with and without the present load scheme implemented during normal operation. As indicated in the graphs 30, the wind turbine 1" was subjected to extreme wind gust conditions in this mode.

These extreme wind gust conditions were detected (marked by arrow 32) by the present load scheme and the operational parameters 22 of the wind turbine 1" were restricted according to the operational limit parameters 20. Thus, the present load scheme also acts as a safety feature for the wind turbine operation.

Fig. 11 shows five operational parameters of the wind turbine 1" with the present load scheme implemented during high turbulences. As indicated in the graphs 30, the present load scheme was only activated in critical load situations.

## Claims

1. A method of controlling a wind turbine (1) by means of indirect turbulence measurements, the wind turbine (1) comprising a wind turbine tower (2), a nacelle (3) arranged on top of the wind turbine tower (2), a rotor with at least two wind turbine blades (5) arranged rotatably relative to the nacelle (3), and a wind turbine control system (12) comprising a controller (15) and a sensor unit (13, 14), wherein the controller (15) is configured to control the operation of the wind turbine (1), and the sensor unit (13, 14) is electrically connected to the controller (15) and configured to measure a vibration signal of the wind turbine (1), wherein the sensor unit (13, 14) comprises a vibration sensor (13), wherein the method comprises the steps of:
- measuring a vibration signal of the wind turbine (1) indicative of turbulence by use of the vibration sensor (13),
- calculating a severity indicator (18) based on the vibration signal, wherein the severity indicator (18) is a signal indicative of the severity level of the current vibrations of the wind turbine (1),
- determining an operational limit parameter (20) as a function of the severity indicator (18), wherein the operational limit parameter (20) indicates a minimum or maximum limit of an operational range of an operational parameter (22) of the wind turbine (1),
- determining a control signal for controlling the operational parameter (22) based on the operational limit parameter (20), and
- controlling the operation of the wind turbine (1) according to the control signal, wherein the step of determining an operational limit parameters (20) comprises,
- dividing a range of the severity indicator (18) into operational zones defined by threshold values (27, 28), wherein the threshold values (27, 28) comprise a first threshold value (27) and a second threshold value (28), and
- comparing the severity indicator (18) with the threshold values (27, 28), wherein
if the severity indicator (18) is below the first threshold value (27), a first operational limit parameter (20') is determined, then the wind turbine is operated in an alert mode, and the wind turbine is put in a reduced operation mode in order to detect any extreme wind gusts; and
if the severity indicator (18) is above the second threshold value (28), a second operational limit parameter (20") is determined, then the wind turbine is operated in a reduced load mode, and the operation of the wind turbine is reduced to reduce extreme loads.

2. The method according to claim 1, **characterised in that** the vibration signal is measured in a top part of the wind turbine (1).

3. The method according to claim 1 or 2, **characterised in that** the vibrations are measured in real-time.

4. The method according to any one of claims 1 to 3, **characterised in that** the severity indicator (18) is calculated within a predetermined time period.

5. The method according to claim 1, **characterised in that** a first control signal is determined based on the first operational limit parameter (20'), wherein the wind turbine (1) is operated in a first mode according to the first control signal.

6. The method according to claim 1, **characterised in that** a second control signal is determined based on the second operational limit parameter (20"), wherein the wind turbine (1) is operated in a second mode according to the second control signal.

7. The method according to claim 1, **characterized in that** a third operational limit parameter (20"') is determined if the severity indicator (18) is above the first threshold value (27) and below the second threshold value (28).

8. The method according to claim 7, **characterized in that** a third control signal is determined based on the third operational limit parameter (20‴), wherein the wind turbine (1) is controlled in a normal operation mode according to the third control signal.

9. A wind turbine (1) comprising:
- a wind turbine tower (2),
- a nacelle (3) arranged on top of the wind turbine tower (2),
- a rotor with at least two wind turbine blades (5) arranged rotatably relative to the nacelle (3),
- a wind turbine control system (12) comprising a controller (15) and a sensor unit (13, 14), wherein the sensor unit (13, 14) comprises a vibration sensor (13), wherein the controller (15) is configured to control the operation of the wind turbine (1), the sensor unit (13, 14) is electrically connected to the controller (15) and the vibration sensor (13) is configured to measure a vibration signal of the wind turbine (1),
- wherein the controller (15) is further configured to calculate a severity indicator (18) based on the vibration signal, to determine an operational limit parameter (20) as a function of the severity indicator (18), wherein the severity indicator (18) is a signal indicative of the severity level of the current vibrations of the wind turbine (1), and the operational limit parameter (20) indicates a minimum or maximum limit of an operational range of an operational parameter (22) of the wind turbine (1),
- wherein the controller (15) is further configured to determine a control signal for controlling the operational parameter (22) based on the operational limit parameter (20), and to control the operation of the wind turbine (1) according to the control signal,
wherein the controller (15) is further configured to determine the operational limit parameter (20) as a function of the severity indicator (18) by:
- dividing a range of the severity indicator (18) into operational zones defined by threshold values (27, 28), wherein the threshold values (27, 28) comprise a first threshold value (27) and a second threshold value (28),
- comparing the severity indicator (18) with the threshold values (27, 28), and
- if the severity indicator (18) is below the first threshold value (27), a first operational limit parameter (20') is determined, then the wind turbine is operated in an alert mode, and the wind turbine is put in a reduced operation mode in order to detect any extreme wind gusts; and
- if the severity indicator (18) is above the second threshold value (28), a second operational limit parameter (20") is determined, then the wind turbine (1) is operated in a reduced load mode, and the operation of the wind turbine (1) is reduced to reduce extreme loads.

10. The wind turbine according to claim 9, **characterised in that** the vibration sensor (13) is arranged in a top part of the wind turbine (1), wherein the vibration sensor (13) is configured to measure at least one of accelerations, velocities or displacements in at least one direction.

11. The wind turbine according to claim 9, **characterised in that** the controller (15) is configured to calculate the severity indicator using at least one of a cyclic counter, a RMS algorithm or an averaging algorithm.

12. The wind turbine according to any one of claims 9 to 11, **characterised in that** the control signal is at least one of a pitch control signal (Θ), a thrust control signal, a torque control signal (τ) or a rotational speed control signal (ω).

13. The wind turbine according to claim 9, **characterized in that** the controller (15) is configured to determine a third operational limit parameter (20"') if the severity indicator (18) is above the first threshold value (27) and below the second threshold value (28).

14. The wind turbine according to claim 13, **characterized in that** the controller (15) is configured to determine a third control signal based on the third operational limit parameter (20‴), wherein the wind turbine (1) is controlled in a normal operation mode according to the third control signal.

## Patentansprüche

1. Verfahren zum Steuern einer Windturbine (1) mittels indirekter Turbulenzmessungen, wobei die Windturbine (1) einen Windturbinenturm (2), eine Gondel (3), die an dem Kopfende des Windturbinenturms (2) angeordnet ist, einen Rotor mit mindestens zwei Windturbinenblättern (5), die relativ zur Gondel (3) drehbar angeordnet sind, und ein Windturbinen-Steuerungssystem (12) mit einer Steuerung (15) und einer Sensoreinheit (13, 14), wobei die Steuerung (15) konfiguriert ist, um den Betrieb der Windturbine (1) zu steuern, und die Sensoreinheit (13, 14) elektrisch mit der Steuerung (15) verbunden und derart konfiguriert ist, ein Vibrationssignal der Windturbine (1) zu messen, wobei die Sensoreinheit (13, 14) einen Vibrationssensor (13) aufweist, wobei das Verfahren die folgenden Schritte umfasst:
- Messen eines Vibrationssignals der Windturbine (1), das eine Turbulenz anzeigt, durch Verwendung des Vibrationssensors (13),
- Berechnen eines Schweregradindikators (18) auf der Grundlage des Vibrationssignals, wobei der Schweregradindikator (18) ein Signal ist, das das Schweregrad-Niveau der aktuellen Vibration der Windturbine (1) anzeigt,
- Bestimmen eines Betriebsgrenzparameters (20) als eine Funktion des Schweregradindikators (18), wobei der Betriebsgrenzparameter (20) eine minimale oder maximale Grenze eines Betriebsbereichs eines Betriebsparameters (22) der Windturbine (1) anzeigt,
- Bestimmen eines Steuersignals zum Steuern des Betriebsparameters (22) auf der Grundlage des Betriebsgrenzparameters (20), und
- Steuern des Betriebs der Windturbine (1) gemäß dem Steuersignal,
wobei der Schritt des Bestimmens eines Betriebsgrenzparameters (20) die folgenden Schritte umfasst:
- Unterteilen eines Bereichs des Schweregradindikators (18) in Betriebszonen, die durch Schwellenwerte (27, 28) definiert sind, wobei die Schwellenwerte (27, 28) einen ersten Schwellenwert (27) und einen zweiten Schwellenwert (28) aufweisen, und
- Vergleichen des Schweregradindikators (18) mit den Schwellenwerten (27, 28), wobei wenn der Schweregradindikator (18) unterhalb des ersten Schwellenwert (27) liegt, ein erster Betriebsgrenzparameter (20') bestimmt wird, dann die Windturbine in einem Warnmodus betrieben wird und die Windturbine in einen reduzierten Betriebsmodus versetzt wird, um etwaige extremen Windböen zu erfassen; und
wenn der Schweregradindikator (18) oberhalb des zweiten Schwellenwerts (28) liegt, ein zweiter Betriebsgrenzparameter (20") bestimmt wird, dann die Windturbine in einem reduzierten Lastmodus betrieben wird, und der Betrieb der Windturbine reduziert wird, um extreme Lasten zu reduzieren.

2. Verfahren nach Anspruch 1, **dadurch gekennzeichnet, dass** das Vibrationssignal in einem oberen Teil der Windturbine (1) gemessen wird.

3. Verfahren nach Anspruch 1 oder 2, **dadurch gekennzeichnet, dass** die Vibrationen in Echtzeit gemessen werden.

4. Verfahren nach einem der Ansprüche 1 bis 3, **dadurch gekennzeichnet, dass** der Schweregradindikator (18) innerhalb einer vorgegebenen Zeitspanne berechnet wird.

5. Verfahren nach Anspruch 1, **dadurch gekennzeichnet, dass** ein erstes Steuersignal auf der Grundlage des ersten Betriebsgrenzparameters (20') bestimmt wird, wobei die Windturbine (1) gemäß dem ersten Steuersignal in einem ersten Modus betrieben wird.

6. Verfahren nach Anspruch 1, **dadurch gekennzeichnet, dass** ein zweites Steuersignal auf der Grundlage des zweiten Betriebsgrenzparameters (20") bestimmt wird, wobei die Windturbine (1) in einem zweiten Modus gemäß dem zweiten Steuersignal betrieben wird.

7. Verfahren nach Anspruch 1, **dadurch gekennzeichnet, dass** ein dritter Betriebsgrenzparameter (20"') bestimmt wird, wenn der Schweregradindikator (18) oberhalb des ersten Schwellenwertes (27) und unterhalb des zweiten Schwellenwertes (28) liegt.

8. Verfahren nach Anspruch 7, **dadurch gekennzeichnet, dass** ein drittes Steuersignal auf der Grundlage des dritten Betriebsgrenzparameters (20‴) bestimmt wird, wobei die Windturbine (1) gemäß dem dritten Steuersignal in einem normalen Betriebsmodus gesteuert wird.

9. Windturbine (1) mit:
- einem Windturbinenturm (2),
- einer Gondel (3), die am Kopfende des Windturbinenturms (2) angeordnet ist,
- einem Rotor mit mindestens zwei Windturbinenblättern (5), die relativ zur Gondel (3) drehbar angeordnet sind, und
- einem Windturbinen-Steuerungssystem (12), das eine Steuerung (15) und eine Sensoreinheit (13, 14) aufweist, wobei die Sensoreinheit (13, 14) einen Vibrationssensor (13) aufweist, wobei die Steuerung (15) konfiguriert ist, um den Betrieb der Windturbine (1) zu steuern, die Sensoreinheit (13, 14) elektrisch mit der Steuerung (15) verbunden ist und der Vibrationssensor (13) konfiguriert ist, um ein Vibrationssignal der Windturbine (1) zu messen,
- wobei die Steuerung (15) ferner derart konfiguriert ist, dass sie einen Schweregradindikator (18) auf der Grundlage des Vibrationssignals berechnet, um einen Betriebsgrenzparameter (20) als eine Funktion des Schweregradindikators (18) zu bestimmen, wobei der Schweregradindikator (18) ein Signal ist, das das Schweregrad-Niveau der aktuellen Vibrationen der Windturbine (1) anzeigt, und der Betriebsgrenzparameter (20) eine minimale oder maximale Grenze eines Betriebsbereichs eines Betriebsparameters (22) der Windturbine (1) anzeigt,
- wobei die Steuerung (15) ferner konfiguriert ist, um ein Steuersignal zum Steuern des Betriebsparameters (22) auf der Grundlage des Betriebsgrenzparameters (20) zu bestimmen und den Betrieb der Windturbine (1) gemäß dem Steuersignal zu steuern,
wobei die Steuerung (15) ferner konfiguriert ist, um den Betriebsgrenzparameter (20) als eine Funktion des Schweregradindikators (18) zu bestimmen, durch
- Unterteilen eines Bereichs des Schweregradindikators (18) in Betriebszonen, die durch Schwellenwerte (27, 28) definiert sind, wobei die Schwellenwerte (27, 28) einen ersten Schwellenwert (27) und einen zweiten Schwellenwert (28) aufweisen,
- Vergleichen des Schweregradindikators (18) mit den Schwellenwerten (27, 28), und
- wenn der Schweregradindikator (18) unterhalb des ersten Schwellenwerts (27) liegt, ein erster Betriebsgrenzparameter (20') bestimmt wird, dann die Windturbine in einem Warnmodus betrieben wird und die Windturbine in einen reduzierten Betriebsmodus versetzt wird, um etwaige extreme Windböen zu erfassen; und
- wenn der Schweregradindikator (18) oberhalb des zweiten Schwellenwerts (28) liegt, ein zweiter Betriebsgrenzparameter (20") bestimmt wird, dann die Windturbine (1) in einem reduzierten Lastmodus betrieben wird, und der Betrieb der Windturbine (1) reduziert wird, um extreme Lasten zu reduzieren.

10. Windturbine nach Anspruch 9, **dadurch gekennzeichnet, dass** der Vibrationssensor (13) in einem oberen Teil der Windturbine (1) angeordnet ist, wobei der Vibrationssensor (13) konfiguriert ist, um Beschleunigungen, und/oder Geschwindigkeiten und/oder Verschiebungen in mindestens einer Richtung zu messen.

11. Windturbine nach Anspruch 9, **dadurch gekennzeichnet, dass** die Steuerung (15) konfiguriert ist, um den Schweregradindikator durch Verwendung eines zyklischen Zählers, und/oder eines RMS-Algorithmus und/oder eines Mittelungsalgorithmus zu berechnen.

12. Windturbine nach einem der Ansprüche 9 bis 11, **dadurch gekennzeichnet, dass** das Steuersignal ein Pitch-Steuersignal (Θ), und/oder ein Schub-Steuersignal, und/oder ein Drehmoment-Steuersignal (τ) und/oder ein Drehzahl-Steuersignal (ω) ist.

13. Windturbine nach Anspruch 9, **dadurch gekennzeichnet, dass** die Steuerung (15) konfiguriert ist, um einen dritten Betriebsgrenzparameter (20"') zu bestimmen, wenn der Schweregradindikator (18) oberhalb des ersten Schwellenwerts (27) und unterhalb des zweiten Schwellenwerts (28) liegt.

14. Windturbine nach Anspruch 13, **dadurch gekennzeichnet, dass** die Steuerung (15) konfiguriert ist, ein drittes Steuersignal auf der Grundlage des dritten Betriebsgrenzparameters (20‴) zu bestimmen, wobei die Windturbine (1) in einem normalen Betriebsmodus gemäß dem dritten Steuersignal gesteuert wird.

## Revendications

1. Procédé de commande d'une éolienne (1) au moyen de mesures de turbulence indirectes, l'éolienne (1) comprenant une tour d'éolienne (2), une nacelle (3) agencée au sommet de la tour d'éolienne (2), un rotor avec au moins deux pales d'éolienne (5) agencées de manière rotative par rapport à la nacelle (3), et un système de commande d'éolienne (12) comprenant un dispositif de commande (15) et une unité capteur (13, 14), dans lequel le dispositif de commande (15) est configuré pour commander le fonctionnement de l'éolienne (1), et l'unité capteur (13, 14) est électriquement connectée au dispositif de commande (15) et configurée pour mesurer un signal de vibration de l'éolienne (1), dans lequel l'unité capteur (13, 14) comprend un capteur de vibration (13), dans lequel le procédé comprend les étapes de :
- mesure d'un signal de vibration de l'éolienne (1) indiquant la turbulence à l'aide du capteur de vibration (13),
- calcul d'un indicateur de gravité (18) sur la base du signal de vibration, dans lequel l'indicateur de gravité (18) est un signal indiquant le niveau de gravité des vibrations actuelles de l'éolienne (1),
- détermination d'un paramètre de limite opérationnelle (20) en fonction de l'indicateur de gravité (18), dans lequel le paramètre de limite opérationnelle (20) indique une limite minimale ou maximale d'une plage opérationnelle d'un paramètre opérationnel (22) de l'éolienne (1), - détermination d'un signal de commande pour commander le paramètre opérationnel (22) sur la base du paramètre de limite opérationnelle (20), et
- commande du fonctionnement de l'éolienne (1) en fonction du signal de commande, dans lequel l'étape de détermination d'un paramètre de limite opérationnelle (20) comprend, - la division d'une plage de l'indicateur de gravité (18) en zones opérationnelles définies par des valeurs seuils (27, 28), dans lequel les valeurs seuils (27, 28) comprennent une première valeur seuil (27) et une seconde valeur seuil (28), et
- comparaison de l'indicateur de gravité (18) avec les valeurs seuils (27, 28), dans lequel si l'indicateur de gravité (18) est inférieur à la première valeur seuil (27), un premier paramètre de limite opérationnelle (20') est déterminé, puis l'éolienne est exploitée dans un mode d'alerte, et l'éolienne est mise dans un mode de fonctionnement réduit afin de détecter d'éventuelles rafales de vent extrêmes ; et
si l'indicateur de gravité (18) est supérieur à la seconde valeur seuil (28), un deuxième paramètre de limite opérationnelle (20") est déterminé, puis l'éolienne est exploitée dans un mode de charge réduite, et le fonctionnement de l'éolienne est réduit pour réduire les charges extrêmes.

2. Procédé selon la revendication 1, **caractérisé en ce que** le signal de vibration est mesuré dans une partie supérieure de l'éolienne (1).

3. Procédé selon la revendication 1 ou 2, **caractérisé en ce que** les vibrations sont mesurées en temps réel.

4. Procédé selon l'une quelconque des revendications 1 à 3, **caractérisé en ce que** l'indicateur de gravité (18) est calculé dans un délai prédéterminé.

5. Procédé selon la revendication 1, **caractérisé en ce qu'**un premier signal de commande est déterminé sur la base du premier paramètre de limite opérationnelle (20'), dans lequel l'éolienne (1) est exploitée dans un premier mode en fonction du premier signal de commande.

6. Procédé selon la revendication 1, **caractérisé en ce qu'**un deuxième signal de commande est déterminé sur la base du deuxième paramètre de limite opérationnelle (20"), dans lequel l'éolienne (1) est exploitée dans un second mode en fonction du deuxième signal de commande.

7. Procédé selon la revendication 1, **caractérisé en ce qu'**un troisième paramètre de limite opérationnelle (20"') est déterminé si l'indicateur de gravité (18) est supérieur à la première valeur seuil (27) et inférieur à la seconde valeur seuil (28).

8. Procédé selon la revendication 7, **caractérisé en ce qu'**un troisième signal de commande est déterminé sur la base du troisième paramètre de limite opérationnelle (20"), dans lequel l'éolienne (1) est commandée dans un mode de fonctionnement normal en fonction du troisième signal de commande.

9. Éolienne (1) comprenant :
- une tour d'éolienne (2),
- une nacelle (3) agencée au sommet de la tour d'éolienne (2),
- un rotor avec au moins deux pales d'éolienne (5) agencées de manière rotative par rapport à la nacelle (3),
- un système de commande d'éolienne (12) comprenant un dispositif de commande (15) et une unité capteur (13, 14), dans laquelle l'unité capteur (13, 14) comprend un capteur de vibration (13), dans laquelle le dispositif de commande (15) est configuré pour commander le fonctionnement de l'éolienne (1), l'unité capteur (13, 14) est électriquement connectée au dispositif de commande (15) et le capteur de vibration (13) est configuré pour mesurer un signal de vibration de l'éolienne (1),
- dans laquelle le dispositif de commande (15) est en outre configuré pour calculer un indicateur de gravité (18) sur la base du signal de vibration, pour déterminer un paramètre de limite opérationnelle (20) en fonction de l'indicateur de gravité (18), dans laquelle l'indicateur de gravité (18) est un signal indiquant le niveau de gravité des vibrations actuelles de l'éolienne (1), et le paramètre de limite opérationnelle (20) indique une limite minimale ou maximale d'une plage opérationnelle d'un paramètre opérationnel (22) de l'éolienne (1),
- dans laquelle le dispositif de commande (15) est en outre configuré pour déterminer un signal de commande pour commander le paramètre opérationnel (22) sur la base du paramètre de limite opérationnelle (20), et pour commander le fonctionnement de l'éolienne (1) en fonction du signal de commande, dans laquelle le dispositif de commande (15) est en outre configuré pour déterminer le paramètre de limite opérationnelle (20) en fonction de l'indicateur de gravité (18) par :
- la division d'une plage de l'indicateur de gravité (18) en zones opérationnelles définies par des valeurs seuils (27, 28), dans laquelle les valeurs seuils (27, 28) comprennent une première valeur seuil (27) et une seconde valeur seuil (28),
- la comparaison de l'indicateur de gravité (18) avec les valeurs seuils (27, 28), et
- si l'indicateur de gravité (18) est inférieur à la première valeur seuil (27), un premier paramètre de limite opérationnelle (20') est déterminé, puis l'éolienne est exploitée dans un mode d'alerte, et l'éolienne est mise dans un mode de fonctionnement réduit afin de détecter d'éventuelles rafales de vent extrêmes ; et
- si l'indicateur de gravité (18) est supérieur à la seconde valeur seuil (28), un deuxième paramètre de limite opérationnelle (20") est déterminé, puis l'éolienne (1) est exploitée dans un mode de charge réduite, et le fonctionnement de l'éolienne (1) est réduit pour réduire les charges extrêmes.

10. Éolienne selon la revendication 9, **caractérisée en ce que** le capteur de vibration (13) est agencé dans une partie supérieure de l'éolienne (1), dans laquelle le capteur de vibration (13) est configuré pour mesurer au moins un élément parmi des accélérations, des vitesses ou des déplacements dans au moins une direction.

11. Éolienne selon la revendication 9, **caractérisée en ce que** le dispositif de commande (15) est configuré pour calculer l'indicateur de gravité en utilisant au moins l'un parmi un compteur cyclique, un algorithme RMS ou un algorithme de moyenne.

12. Éolienne selon l'une quelconque des revendications 9 à 11, **caractérisée en ce que** le signal de commande est au moins l'un parmi un signal de commande de pas (θ), un signal de commande de poussée, un signal de commande de couple de rotation (*τ*) ou un signal de commande de vitesse de rotation (ω).

13. Éolienne selon la revendication 9, **caractérisée en ce que** le dispositif de commande (15) est configuré pour déterminer un troisième paramètre de limite opérationnelle (20"') si l'indicateur de gravité (18) est supérieur à la première valeur seuil (27) et inférieur à la seconde valeur seuil (28).

14. Éolienne selon la revendication 13, **caractérisée en ce que** le dispositif de commande (15) est configuré pour déterminer un troisième signal de commande sur la base du troisième paramètre de limite opérationnelle (20"'), dans laquelle l'éolienne (1) est commandée dans un mode de fonctionnement normal en fonction du troisième signal de commande.
